**Europäisches Patentamt**

**European Patent Office**

**Office européen des brevets**

(19)

(11) Veröffentlichungsnummer : **0 513 926 A1**

(12) **EUROPÄISCHE PATENTANMELDUNG**

(21) Anmeldenummer : **92201369.3**

(22) Anmeldetag : **06.05.92**

(51) Int. Cl.⁵ : **D21H 27/32, D21H 27/34, B32B 29/02, B32B 27/02**

(30) Priorität : **14.05.91 ES 9101472**

(43) Veröffentlichungstag der Anmeldung :
**19.11.92 Patentblatt 92/47**

(84) Benannte Vertragsstaaten :
**PT**

(71) Anmelder : **Ginestet i Cusso, Ramon**
**Placa de l'Estacio, No. 2**
**E-25230 Mollerussa (ES)**

(72) Erfinder : **Ginestet i Cusso, Ramon**
**Placa de l'Estacio, No. 2**
**E-25230 Mollerussa (ES)**

(74) Vertreter : **Meinke, Julius, Dipl.-Ing. et al**
**Patentanwälte Meinke und Dabringhaus**
**Westenhellweg 67**
**W-4600 Dortmund 1 (DE)**

(54) **Karton mit hoher Reissfestigkeit und Verfahren zur Herstellung desselben.**

(57)     Mit einem Karton mit hoher Reißfestigkeit, soll eine Lösung geschaffen werden, mit der bei Aufrechterhaltung der erforderlichen Festigkeitsanforderungen ein Karton zur Verfügung gestellt werden kann, der zu seiner Herstellung wesentlich weniger oder gar keiner Naturhölzer bedarf und dessen Herstellung insgesamt wesentlich umweltfreundlicher ist.

Dies wird durch wenigstens zwei Schichten (2,3) aus Cellulose erreicht, zwischen denen eine gewebeartige Struktur (4) aus natürlichen oder künstlichen Fasern angeordnet ist, wobei die Celluloseschichten (2,3) und die gewebeartige Struktur (4) als in feuchtem Zustand gebildeter Verbundkörper ausgebildet sind.

EP 0 513 926 A1

Die Erfindung betrifft einen Karton mit hoher Reißfestigkeit und ein Verfahren zur Herstellung eines solchen Kartons.

Für Verpackungen jeder Art, die dazu geeignet sind, tragende Funktionen für das Verpackungsgut zu übernehmen, ist es derzeit üblich, sogenannte Kraftliner aus Pappkarton einzusetzen. Diese Kraftliner zeichnen sich durch eine hohe Reißfestigkeit aus und bestehen bevorzugt aus langfaseriger Cellulose. Um derartige Kraftliner herzustellen, ist es deshalb bisher erforderlich, langfaseriges Holz einzusetzen, z.B. Kiefer oder Tanne. Diese langfaserigen Holzarten haben jedoch die Eigenschaft, sehr langsam zu wachsen, so daß der mehr und mehr steigende Bedarf an derartigen Verpackungen immer mehr dazu führt, daß irreparable Schäden in den Waldbeständen auftreten.

Diese vorgeschilderten Nachteile bestehen nicht nur bei der Herstellung reißfester Kartons, sondern auch bei anderen Kartonarten, da es zur Erzielung einer ausreichenden Festigkeit immer erforderlich ist, reines Naturholz einzusetzen, wobei im jeweiligen Anwendungsfall entsprechend dimensionierte Kartons mit ausreichender großer Wandstärke eingesetzt werden müssen, was den Holzverbrauch entsprechend vergrößert. Ein weiterer Nachteil bei der bekannten Kartonherstellung liegt darin, daß zur Herstellung ein sehr großer Wasserbedarf erforderlich ist, was aus Umweltgesichtspunkten und aus der zu erwartenden Entwicklung der Wasserreserven nicht vertretbar ist.

Aufgabe der Erfindung ist die Schaffung einer Lösung, mit der bei Aufrechterhaltung der erforderlichen Festigkeitsanforderungen ein Karton zur Verfügung gestellt werden kann, der zu seiner Herstellung wesentlich weniger oder gar keiner Naturhölzer bedarf und dessen Herstellung insgesamt wesentlich umweltfreundlicher ist.

Diese Aufgabe wird mit einem Karton mit hoher Reißfestigkeit erfindungsgemäß gelöst durch wenigstens zwei Schichten aus Cellulose, zwischen denen eine gewebeartige Struktur aus natürlichen oder künstlichen Fasern angeordnet ist, wobei die Celluloseschichten und die gewebeartige Struktur als in feuchtem Zustand gebildeter Verbundkörper ausgebildet sind.

Mit der Erfindung ist es möglich, einen reißfesten Karton zur Verfügung zu stellen, der bei gleichen oder besseren Festigkeitseigenschaften gegenüber herkömmlichen Kartons einen wesentlich geringeren Anteil an Cellulose benötigt, d.h. es läßt sich bei wesentlich geringerem Materialverbrauch mit wesentlich geringeren Kartonwandstärken ein Karton herstellen, der die gleichen Festigkeitseigenschaften aufweist. Dabei entsteht durch die Verbindung der feuchten, zähflüssigen Celluloseschichten mit der zwischengelegten netzgewebeartigen Struktur aus natürlichen oder künstlichen Fasern und anschließendes Verpressen ein Verbundkörper, d.h. die Fasern der beiden Schichten greifen ineinander und zwischen die Gewebestruktur, so daß ein völlig einheitlicher Körper in einem Herstellungsgang entsteht. Dabei ist aufgrund der Anordnung der zwischengelegten Gewebeschicht die Reißfestigkeit des Kartons in allen Richtungen etwa gleich groß. Aufgrund des wesentlich geringeren Celluloseanteils gegenüber bekannten Kartons (Kraftlinern) läßt sich entsprechend auch der Energie- und Wasseraufwand entscheidend verringern.

Besonders vorteilhaft ist es, wenn die Celluloseschichten aus Altpapier bestehen. Gegenüber bekannten derartigen Kartons, für die ein Einsatz von Altpapier nicht möglich ist, da Altpapiercellulosefasern vergleichsweise kurzfaserig sind und deshalb nicht die erforderlichen Festigkeitseigenschaften aufweisen, ist es erfindungsgemäß möglich, nur Altpapier einzusetzen, da die Festigkeit des Kartons allein durch die innige Verbindung zwischen den Cellulosefasern und dem eingeschlossenen Netzgewebe entsteht. Gleichzeitig läßt sich durch den Einsatz von Altpapier der Energie- und Wasserbedarf bei der Herstellung noch weiter verringern.

Für die gewebeartige Struktur hat es sich als vorteilhaft erwiesen, natürliche Fasern aus Baumwolle, Wolle oder Seide oder künstliche Fasern aus Dralon oder Polyester einzusetzen.

Zur Erhöhung der Festigkeit und Verbesserung der Verbundbildung ist vorteilhaft vorgesehen, daß zwischen den einzelnen Schichten jeweils eine organische Kleberschicht angeordnet ist. Der Kleber wird dabei beim Zusammenführen der feuchten Schichten gelöst und trägt anschließend zu einer besonders festen Verbindung zwischen den einzelnen Schichten bei.

Soll der Karton sich zum Druck eignen, d.h. soll es sich um einen lithographischen Karton handeln, sieht die Erfindung zusätzlich vor, daß auf der äußeren Celluloseschicht eine bedruckbare Deckschicht angeordnet ist.

Zur Lösung der eingangs gestellten Aufgabe sieht die Erfindung auch ein Verfahren zur Herstellung des vorbeschriebenen Kartons vor, das sich dadurch auszeichnet, daß zunächst eine zähflüssige Masse aus Cellulose zugeführt, auf diese eine gewebeartige Struktur aus natürlicher oder künstlicher Faser aufgebracht wird, und daß anschließend eine weitere zähflüssige Masse aus Cellulose auf die gewebeartige Struktur aufgebracht wird und sämtliche Schichten miteinander verpreßt werden.

Mit dem erfindungsgemäßen Verfahren ist es auf einfache Weise möglich, einen vorbeschriebenen reißfesten Karton herzustellen, wobei durch die Verbindung und Verpressung der Celluloseschichten mit der netzgewebeartigen Struktur im zähflüssigen Cellulosezustand eine Verbindung der einzelnen Fasern der Celluloseschichten miteinander und zwischen den Gewebeschichten erfolgt, so daß ohne zusätzliche Verfahrensschritte und ohne zusätzliche Materialien, wie beispielsweise Klebstoffe, ein Verbundkörper entsteht, d.h. die einzelnen Fasern der Celluloseschichten greifen durch das Gewebe hindurch ineinander. Dabei hat sich überraschend herausgestellt, daß trotz des Einbringen des Fremdkörpers (gewebeartige Struktur), der sich Wasser gegenüber neutral verhält, beim Trocknen des Kartons das Wasser entweichen kann, so daß es nicht zur Blasenbildung oder sonstigen Komplikationen kommt, vielmehr steht anschließend ein Karton zur Verfügung, der vollständig glatte Oberflächen aufweist.

Für eine besonders hohe Reißfestigkeit und besonders gute Verbundkörperausbildung ist vorgesehen, daß die gewebeartige Struktur vor Aufbringung auf die erste Cellulosemasse mit einem wasserlöslichen organischen Kleber beschichtet wird. Wird dann die Gewebestruktur auf die erste Cellulosemasse, die sich im zähflüssigen Zustand befindet, aufgebracht, so wird der organische Kleber gelöst und entfaltet seine Klebefunktion, wodurch dann durch Verpressen eine besonders gute Verbindung zwischen der Celluloseschicht und der Gewebeschicht entsteht.

Dabei ist vorteilhaft dann auch vorgesehen, daß vor Aufbringung der zweiten zähflüssigen Cellulosemasse auf die Aufbringseite derselben ein organischer wasserlöslicher Kleber aufpulverisiert wird, so daß dann ebenfalls eine besonders gute Verbindung zwischen dieser Celluloseschicht und dem Gewebe sowie der unteren Celluloseschicht entsteht.

In Weiterbildung der Erfindung ist vorgesehen, daß nach dem Zusammenfügen und Verpressen der Cellulosemassen mit der dazwischen angeordneten gewebeartigen Struktur wenigstens eine weitere, insbesondere bedruckbare Deckschicht aufgebracht wird. Diese zusätzliche Ausgestaltung ist dann erforderlich, wenn ein bedruckbarer Karton gewünscht wird, wobei dann die bedruckbare Fläche von der Deckschicht gebildet wird. Diese Deckschicht kann jedoch eine sehr geringe Wandstärke aufweisen, da sie nicht wesentlich zur eigentlichen Festigkeit des Karton beiträgt.

Die Erfindung ist nachstehend anhand der Zeichnung beispielsweise näher erläutert. Diese zeigt in

Fig. 1 eine Aufsicht auf einen erfindungsgemäßen Karton,

Fig. 2 einen vergrößerten Schnitt durch einen Karton nach Fig. 1,

Fig. 3 einen Schnitt gemäß der Linie III-III in Fig. 2,

Fig. 4 einen Schnitt durch einen Karton nach einer anderen Ausführungsform und

Fig. 5 in Prinzipdarstellung eine Maschine zur Durchführung des erfindungsgemäßen Verfahrens zur Herstellung des erfindungsgemäßen Kartons.

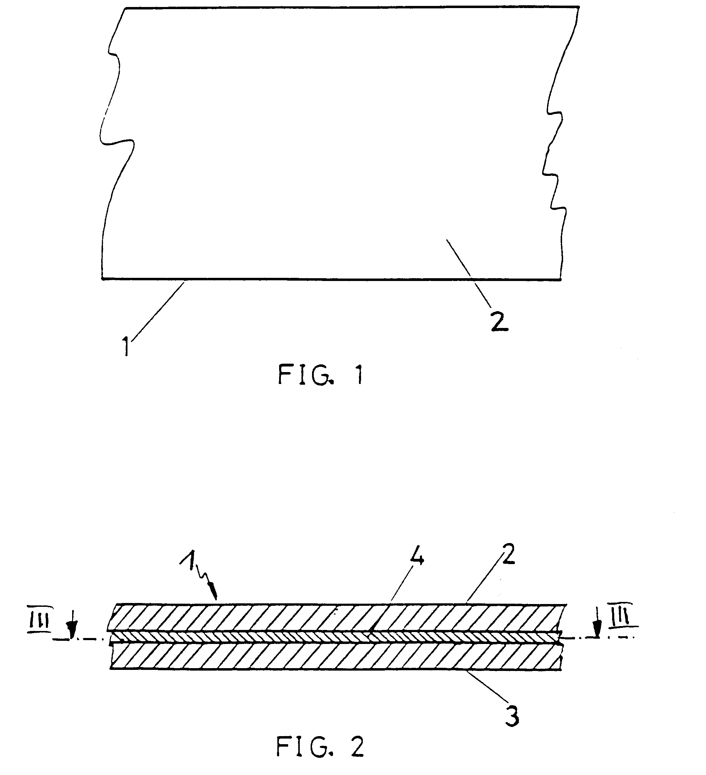

Ein allgemein mit 1 bezeichneter erfindungsgemäßer Karton mit hoher Reißfestigkeit weist beim Ausführungsbeispiel nach Fig. 2 zwei äußere Celluloseschichten auf, eine erste Celluloseschicht 2 und eine zweite Celluloseschicht 3. Dabei bestehen diese Celluloseschichten bevorzugt aus Altpapier, hier können aber selbstverständlich auch andere Cellulosefasern eingesetzt werden.

Zwischen den beiden Celluloseschichten 2 und 3 ist eine gewebeartige Struktur 4 aus natürlichen oder künstlichen Fasern angeordnet. Dabei können beispielsweise netzartige Fasern aus Baumwolle, Wolle oder Seide oder aus Dralon oder Polyester eingesetzt werden. Die gewebeartige Struktur 4 kann dabei unterschiedlich ausgebildet sein, die Maschen können unterschiedliche Abstände aufweisen, für besonders reißfeste Kartons 1 wird ein entsprechend geringer Maschenabstand gewählt.

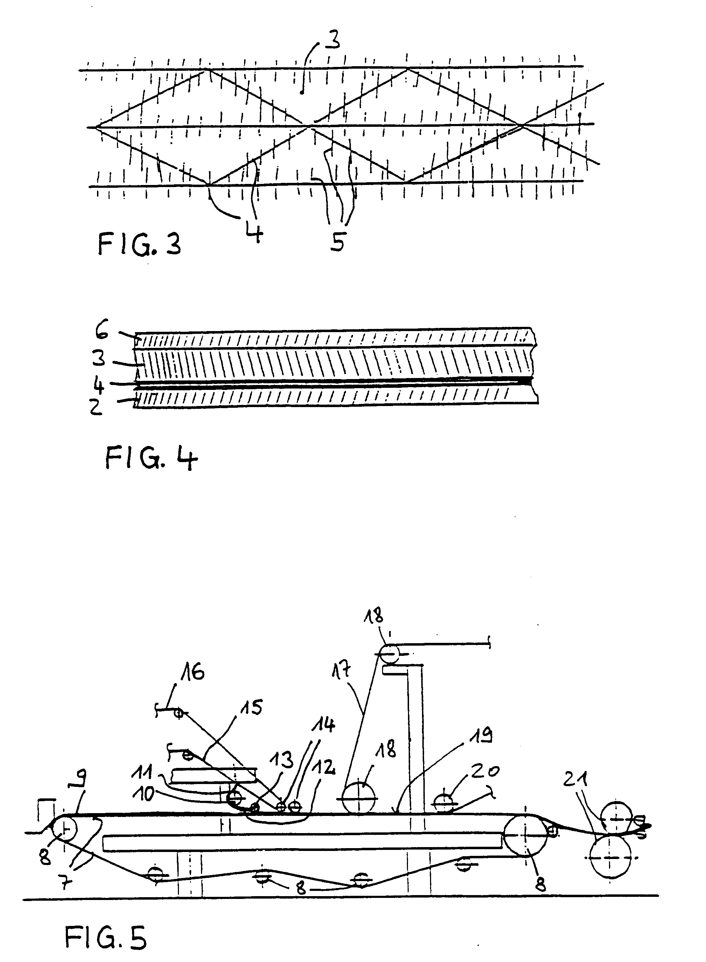

Der Karton 1 aus wenigstens zwei Celluloseschichten 2 und 3 und die dazwischen angeordnete Gewebestruktur 4 ist als Verbundkörper ausgebildet, d.h. durch ein nachfolgend noch beschriebenes Herstellungsverfahren ist gewährleistet, daß die Fasern der beiden Celluloseschichten, diese sind in Fig. 3 mit dem Bezugszeichen 5 angedeutet, einerseits zwischen die Gewebestruktur 4 und andererseits zwischen die Fasern der darauf angeordneten anderen Celluloseschicht 2 bzw. 3 greifen. Die Fasern 5 verhaken sich somit ineinander und mit der Gewebestruktur 4, so daß eine innige Verbindung der einzelnen Schichten 2, 3, 4 stattfindet.

Auch wenn dies in den Figuren 2 und 3 nicht dargestellt ist, kann zur Verbesserung der Verbindung und zur Erzielung einer noch höheren Reißfestigkeit vorgesehen sein, daß zwischen den einzelnen Schichten jeweils eine wasserlösliche organische Klebstoffschicht angeordnet ist, die eine entsprechend noch bessere Verbindung der einzelnen Schichten bewirkt.

Fig. 4 zeigt eine weitere Ausgestaltung der Erfindung. Auch bei dieser Ausführungsform sind zunächst zwei Celluloseschichten 2 und 3 vorgesehen, zwischen denen die netzgewebeartige Strukturschicht 4 angeordnet ist. Auf der Oberseite der zweiten Celluloseschicht 3 ist jedoch zusätzlich noch eine weitere Schicht 6 aus Cellulose, insbesondere gebleichter Cellulose vorgesehen, die auf die Celluloseschicht 3 aufgeklebt sein kann. Diese Schicht eignet sich zum Bedrucken, so daß der Karton 1, wenn er als Verpackung eingesetzt werden soll, gleichzeitig auch als Druckträger dienen kann. Dabei ist durch die Anordnung gewährleistet, daß selbst wenn sich bei der Herstellung des Kartons 1 die Gewebestruktur 4 in die Celluloseschicht 2 und 3 fortsetzt, eine vollständig glatte und einwandfreie obere Schicht 6 des Kartons 1 zur Verfügung steht.

Wesentlich für die Erfindung ist die Art der Herstellung des Kartons 1. Zur Darstellung dieser Verfahrensweise ist in Fig. 5 in einer Prinzipskizze eine Maschine dargestellt, wobei auf einem umlaufenden siebförmigen Förderband 7 mit Antriebs- bzw. Umlenkrollen 8 zunächst eine zähflüssige Masse aus Cellulose zugeführt wird, die mit dem Bezugszeichen 9 angedeutet ist. Über eine entsprechende Antriebs- bzw. Umlenkrolle 10 wird gleichzeitig von oben ein Netzgewebe 11 aus natürlicher oder künstlicher Faser zugeführt, das beispielsweise eine Maschenstruktur 4 (Fig. 3) aufweist. Dieses Netzgewebe weist dabei die gleiche Breite auf wie die zugeführte zähflüssige Cellulosemasse 9. Bevorzugt ist dabei das Netzgewebe 11 auf der Auftragsseite mit einer Kleberschicht 12 mit wasserlöslichem organischen Kleber beschichtet.

Das Gewebe 11 wird dann mit der Kleberseite 12 auf die zähflüssige Cellulosemasse 9 geführt und auf diese mittels einer Walze 13 angedrückt derart, daß das Gewebe auf die feuchte Cellulosemasse 9 aufgelegt wird.

Anschließend wird dann von oben, d.h. von der Seite, auf der die Gewebestruktur angeordnet ist, über eine entsprechende Walze 14 bzw. ggf. weitere Einrichtungen eine zweite zähflüssige Masse aus Cellulose zugeführt, die mit 15 bezeichnet ist. Diese Cellulosemasse 15 weist dabei bevorzugt ebenfalls auf der Autragsseite eine Kleberschicht aus organischem wasserlöslichen Material auf, die aufpulverisiert wird, entsprechende Düsen sind in der Zeichnung nicht dargestellt. Diese zweite Cellulosemasse 15 wird ebenfalls über ein umlaufendes siebförmiges Transportband, das nur bereichsweise dargestellt ist, zugeführt (Bezugszeichen 16). Soll ein lithographischer Karton entstehen, wird anschließend noch eine weitere bedruckbare Schicht bevorzugt aus reiner Cellulose zugeführt, diese ist in Fig. 5 mit dem Bezugszeichen 17 angedeutet, entsprechende Transport- bzw. Zuführwalzen sind mit 18 bezeichnet. Im Bereich 19 des Transportbandes 7 liegt somit ein vierschichtiger Aufbau vor, wie dieser in Fig. 4 dargestellt ist. Um eine einwandfreie Verbindung der einzelnen Schichten zu einem Verbundkörper zu gewährleisten, werden die übereinanderliegenden vier Schichten in mehreren Preßvorgängen im feuchten Zustand zu einem Verbundkörper zusammengepreßt, entsprechende Preßwalzen sind teilweise dargestellt und mit 20 und 21 bezeichnet, wobei die Preßwalze 21 bevorzugt als Saugwalze ausgebildet ist, d.h. in dieser Walze wird bereits ein Teil des Wassers entzogen. Durch die Verpressung greifen die quellenden Fasern der Cellulosemassen (Bezugszeichen 5 in Fig. 3) in die Gewebestruktur 4 ein und verhaken sich an dieser sowie an den jeweils anderen Celluloseschichten.

Wesentlich ist demnach bei der erfindungsgemäßen Verfahrensführung, daß die einzelnen Schichten im zähflüssigen, d.h. feuchten Zustand der Cellulosemassen aufeinandergeführt werden und verpreßt werden, derart, daß eine innige Verbindung zwischen den einzelnen Schichten entsteht, also ein Verbundkörper, bei dem die einzelnen Schichten mit ihren im noch feuchten Zustand quellenden Fasern 5 ineinandergreifen und insbesondere auch die Gewebestruktur 4 umgreifen. Die jeweils erforderliche Wassermenge und der Zusammenpreßdruck hängen dabei jeweils vom Cellulosematerial ab. Der fertige Karton 1 wird anschließend einer Trocknung zugeführt und kann dann nachfolgend entsprechend zugeschnitten werden oder dergl.

In bestimmten Einsatzfällen kann zur noch besseren Verbindung der einzelnen Schichten auch vorgesehen sein, daß zwischen die Schichten Stärke eingebracht wird oder daß die Schichten unterschiedlich elektrisch beladen werden, um eine anschließende Anziehung zu bewirken.

Es hat sich herausgestellt, daß ein derartiger Karton eine hervorragende Reißfestigkeit aufweist, wobei gegenüber bekannten Kraftlinern aus natürlicher Faser, d.h. aus entsprechenden langfaserigen Hölzern, zum einen wesentlich weniger Cellulosematerial benötigt wird, da wesentlich geringere Wandstärken bei gleicher Festigkeit benötigt werden, und zum anderen auch reines Altpapier für die Celluloseschichten eingesetzt werden kann, da die eigentliche Festigkeit durch den Verbund zwischen den auch kurzen Fasern der Celluloseschichten und der dazwischen angeordneten Gewebestruktur 4 entsteht. Aufgrund des wesentlich geringeren Cellulosebedarfs und insbesondere beim Einsatz von Altpapier werden wesentlich geringere Energie- und Wassermengen für die gleiche Kartonmenge gegenüber herkömmlichen Kartons benötigt.

Zur Veranschaulichung der Vorteile des neuartigen Kartons gegenüber bekannten Kartons ist nachfolgend noch ein Vergleichsbeispiel aufgeführt, wobei ein herkömmlicher Karton und ein erfindungsgemäßer Karton jeweils mit einem Gewicht von 508 g/m$^2$ untersucht werden:

Versuchsmessungen von Kartonwiderstandswerten:

|  | erfindungsgem. Karton | | normaler Karton | |
|---|---|---|---|---|
|  | Längs-richtung | Quer-richtung | Längs-richtung | Quer-richtung |
| - Druck zum Aufplatzen des Kartons (kg/cm$^2$) | 5,1 | | 5,2 | |
| - Kraft zum Auseinan-derreißen (N) | 220 | 128 | 210 | 103 |
| - Längenzunahme des Kartons bis zum Reißen (%) | 1,3 | 3,3 | 1,6 | 3,2 |
| - Gewicht zum Zerreißen bei Torsionsbeanspru-chung (g) | 896 | 726 | 238 | 287 |

Erkennbar weist somit der erfindungsgemäße Karton gegenüber herkömmlichen Kartons wesentlich verbesserte mechanische Eigenschaften auf.

Natürlich ist die Erfindung nicht auf die in der Zeichnung dargestellten Ausführungsbeispiele beschränkt. Weitere Ausgestaltungen der Erfindung sind möglich, ohne den Grundgedanken zu verlassen. So kann, wenn dies im einzelnen erforderlich ist, selbstverständlich der Karton auch aus mehr als zwei Celluloseschichten 2,3 mit dazwischen jeweils angeordneter Gewebestruktur 4 ausgebildet sein und dergl. mehr.

**Patentansprüche**

1. Karton mit hoher Reißfestigkeit,
   gekennzeichnet durch
   wenigstens zwei Schichten (2,3) aus Cellulose, zwischen denen eine gewebeartige Struktur (4) aus natürlichen oder künstlichen Fasern angeordnet ist, wobei die Celluloseschichten (2,3) und die gewebeartige Struktur (4) als in feuchtem Zustand gebildeter Verbundkörper ausgebildet sind.

2. Karton nach Anspruch 1,
   dadurch gekennzeichnet,
   daß die Celluloseschichten (2,3) aus Altpapier bestehen.

3. Karton nach Anspruch 1 oder 2,

5

dadurch gekennzeichnet,
daß die gewebeartige Struktur (4) aus Baumwolle, Wolle oder Seide oder aus Dralon oder Polyester besteht.

4. Karton nach Anspruch 1 oder einem der folgenden,
dadurch gekennzeichnet,
daß zwischen den einzelnen Schichten (2,3,4) jeweils eine organische Kleberschicht angeordnet ist.

5. Karton nach Anspruch 1 oder einem der folgenden,
dadurch gekennzeichnet,
daß auf der äußeren Celluloseschicht (3) eine bedruckbare Deckschicht (6) angeordnet ist.

6. Verfahren zur Herstellung eines Kartons nach Anspruch 1 oder einem der folgenden,
dadurch gekennzeichnet,
daß zunächst eine zähflüssige Masse aus Cellulose zugeführt, auf diese eine gewebeartige Struktur aus natürlicher oder künstlicher Faser aufgebracht wird, und daß anschließend eine weitere zähflüssige Masse aus Cellulose auf die gewebeartige Struktur aufgebracht wird und sämtliche Schichten miteinander verpreßt werden.

7. Verfahren nach Anspruch 6,
dadurch gekennzeichnet,
daß die gewebeartige Struktur vor Aufbringung auf die erste Cellulosemasse mit einem wasserlöslichen organischen Kleber beschichtet wird.

8. Verfahren nach Anspruch 7,
dadurch gekennzeichnet,
daß vor Aufbringung der zweiten zähflüssigen Cellulosemasse auf die Aufbringseite derselben ein organischer wasserlöslicher Kleber aufpulverisiert wird.

9. Verfahren nach Anspruch 6 oder einem der folgenden,
dadurch gekennzeichnet,
daß nach dem Zusammenfügen und Verpressen der Cellulosemassen mit der dazwischen angeordneten gewebeartigen Struktur wenigstens eine weitere, insbesondere bedruckbare, Deckschicht aufgebracht wird.

FIG. 1

FIG. 2

FIG. 3

FIG. 4

FIG. 5

**Europäisches Patentamt**

# EUROPÄISCHER RECHERCHENBERICHT

Nummer der Anmeldung

EP 92 20 1369

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A- 759 472 (V MACCLURE) * Seite 3, Zeilen 42-51; Seite 4, Zeilen 6-34; Ansprüche 1,2 * --- | 1,4-7,9 | D 21 H 27/32 D 21 H 27/34 B 32 B 29/02 B 32 B 27/02 |
| X | DE-A- 101 090 (H KARLE) * das ganze Dokument * --- | 1,3,6 | |
| X | DE-A-1 949 408 (RHODIACETA) * Seite 2, Zeilen 1-7, 20-25; Seite 3, Zeilen 12-20; Seite 4, Zeile 24 – Seite 5, Zeile 15; Ansprüche 4,9,10 * --- | 1,3,6 | |
| X | FR-A- 935 046 (L-V SOUBISE) * das ganze Dokument * --- | 1,6 | |
| A | US-A-2 543 101 (C S FRANCIS) * Spalte 3, Zeilen 57-75; Spalte 4, Zeilen 27-41; Spalte 5, Zeilen 28-34; Spalte 9, Zeile 55 – Spalte 10, Zeile 64; Figur 1 * --- | 1-4,6-8 | |
| A | GB-A- 551 610 (PILKINGTON BROTHERS) * Seite 1, Zeilen 36-43 * --- | 4,8 | RECHERCHIERTE SACHGEBIETE (Int. Cl.5) D 21 H A 61 F B 32 B |
| A | DE-A-1 461 264 (KRAFT ET AL) * das ganze Dokument * --- | 1-4,6,7 | |
| A | ABSTRACT BULLETIN; APPLETON, WI, USA 59(1988) Juli Nr. 1, Seite 40 * Strength properties of filament reinforced paperboard packaging* --- | 1,3-8 | |
| A | US-A-3 892 622 (B SKAUGEN) * Spalte 1, Zeile 59 – Spalte 3, Zeile 38; Figur 1 * --- -/- | 1,3,6 | |

Der vorliegende Recherchenbericht wurde für alle Patentansprüche erstellt

| Recherchenort | Abschlußdatum der Recherche | Prüfer |
|---|---|---|
| DEN HAAG | 24-08-1992 | PHILPOTT G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................
& : Mitglied der gleichen Patentfamilie, übereinstimmendes Dokument

EPO FORM 1503 03.82 (P0403)

**Europäisches
Patentamt**

# EUROPÄISCHER RECHERCHENBERICHT

Nummer der Anmeldung

EP  92 20 1369

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-1 335 910  (T B MUNROE)<br>* das ganze Dokument *<br>----- | 1,6 | |

RECHERCHIERTE
SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 24-08-1992 | PHILPOTT G.R. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................................
& : Mitglied der gleichen Patentfamilie, übereinstimmendes
    Dokument

EPO FORM 1503 03.82 (P0403)